# EUROPÄISCHE PATENTANMELDUNG

(11) **EP 3 987 929 A1**
(43) Veröffentlichungstag der Anmeldung: **27.04.2022**
(21) Anmeldenummer: 21401040.7
(22) Anmeldetag: 11.10.2021
(51) Int. Cl.: A01M 7/00, A01B 79/00

(54) **VERFAHREN ZUM AUSBRINGEN VON SPRITZMITTEL MITTELS EINER LANDWIRTSCHAFTLICHEN SPRITZE**

(30) Priorität: 26.10.2020 DE 102020128075
(71) Anmelder: Amazonen-Werke H. Dreyer SE & Co. KG, 49205 Hasbergen (DE)
(72) Erfinder: Rahe, Florian, 49504 Lotte (DE); Wessels, Thomas, 49080 Osnabrück (DE)

(57) **Zusammenfassung**

Verfahren zum Ausbringen von Spritzmittel (30) mittels einer landwirtschaftlichen Spritze (10) bei der ein Einstellparameter mittels zumindest einem der landwirtschaftlichen Spritze (10) zugeordneten Steuer- und/oder Regelsystem (200) abgerufen und/oder vorgegeben wird, wobei auf Basis des Einstellparameters die Spritze (10) eingestellt und/oder parametriert wird und ein Spritzmittel (30) über zumindest ein an einem Gestänge (12) der Spritze (10) angeordnetes Ausbringelement (20) auf einen Pflanzenbestand (P) einer landwirtschaftlichen Nutzfläche (N) ausgebracht wird, wobei zumindest eine Oberfläche (P1, P2) des Pflanzenbestands (P) zumindest teilweise mit Spritzmittel (30) benetzt und die zumindest eine Oberfläche (P2) in einem benetzten Zustand mittels zumindest einer ersten Sensoreinrichtung (40) erfasst wird, und wobei der Einstellparameter in Abhängigkeit der mittels der ersten Sensoreinrichtung (40) erfassten Oberfläche (P2) angepasst wird. Um ein Verfahren zum Ausbringen von Spritzmittel (30) mit verbesserter Erfassung der Benetzung bereitzustellen, ist vorgesehen, dass die zumindest eine Oberfläche (P1, P2) in einem unbenetzten Zustand erfasst und/oder vorgegeben wird; und dass eine tatsächliche Benetzung der zumindest einen Oberfläche (P1, P2) unter Berücksichtigung des benetzten und unbenetzten Zustands ermittelt wird.

## Beschreibung

Die Erfindung betrifft ein Verfahren zum Ausbringen von Spritzmittel gemäß dem Oberbegriff des Patentanspruches 1 und eine landwirtschaftliche Spritze gemäß dem Oberbegriff des Patentanspruches 14.

Innerhalb der Landwirtschaft sind eine Vielzahl von gezogenen, auf- bzw. angebauten und/oder selbstfahrenden Arbeitsgeräten bekannt. Zu derartigen Arbeitsgeräten gehören unter anderem landwirtschaftliche Spritzen zum Ausbringen von Spritzmittel, wobei das Spritzmittel, je nach Art der Bearbeitung und/oder Behandlung einer landwirtschaftlichen Nutzfläche und/oder dessen Pflanzenbestands, Pflanzenschutz-, Unkrautbekämpfungs- und/oder Düngemittel umfasst.

Gattungsgemäße Spritzen umfassen hierbei zumindest einen Vorratsbehälter zum Bevorraten des Spritzmittels und zumindest ein spritzmittelleitendes und/oderförderndes Fördersystem zum Zubringen des Spritzmittels, ausgehend von dem zumindest einen Vorratsbehälter zu einer Vielzahl von Ausbringelementen, insbesondere Spritzdüsen. Die Spritze umfasst ferner zumindest ein quer zu einer Fahrtrichtung der Spritze ausklappbares bzw. einklappbares Gestänge, wobei die Vielzahl von Ausbringelementen nebeneinander entlang des Gestänges, insbesondere einzelner Abschnitte des Gestänges, angeordnet sind.

Typischerweise ist einer derartigen Spritze zumindest ein Steuer- und/oder Regelsystem zugeordnet, das dazu eingerichtet ist, die Ausbringelemente und/oder zumindest eine Einrichtung innerhalb des Fördersystems in Abhängigkeit zumindest eines Einstellparameters derartig anzusteuern und/oder zu regeln, dass das Spritzmittel bedarfsgerecht, insbesondere individuell und/oder gruppenweise, über die Ausbringelemente auf dem Pflanzenbestand ausbringbar ist. Während des Ausbringens wird somit das Spritzmittel auf dem Pflanzenbestand aufgebracht und zumindest eine Oberfläche wenigstens einer Nutzpflanze, insbesondere eines Blatts, Pflanzenstängels und/oder einer Frucht, mit Spritzmittel benetzt.

Aufgrund immer weiter steigender Anforderungen hinsichtlich Umweltbelastungen und/oder Erträge ist dabei eine optimale Benetzung der Oberflächen von entscheidender Bedeutung. Um den zumindest einen Einstellparameter hierfür gezielt anzupassen, sind im Stand der Technik verschiedene Lösungsansätze offenbart. Neben indirekten Erfassungsverfahren, bei denen die Benetzung durch die Berücksichtigung unterschiedlicher mit dem Ausbringvorgang zusammenhängender Bedingungen bestimmt bzw. ermittelt wird, sind auch Erfassungsverfahren bekannt, bei denen die Benetzung der zumindest einen Oberfläche direkt erfasst wird. Eine Möglichkeit ist dabei, einen Belag des Spritzmittels und/oder die Benetzung der zumindest einen Oberfläche im Nachgang eines Ausbringvorgangs von zumindest einem Ausbringelement auf die zumindest eine Oberfläche zu erfassen und daraus auf eine resultierende Benetzung der zumindest einen Oberfläche zu schließen und darauf basierend den zumindest einen Einstellparameter anzupassen.

In der EP 2 898 773 A1 ist ein solches Verfahren zum Ausbringen von Spritzmittel mittels einer landwirtschaftlichen Spritze beschrieben. Bei diesem Verfahren wird zumindest ein Einstellparameter von zumindest einem der Spritze zugeordneten Steuer- und/oder Regelsystem abgerufen und/oder vorgegeben. Anschließend wird die Spritze, insbesondere zumindest eine Einrichtung innerhalb eines spritzmittelleitenden und/oder -fördernden Fördersystems und/oder zumindest ein Ausbringelement, auf Basis des zumindest einen Einstellparameters eingestellt und/oder parametriert. Das Spritzmittel wird dabei über zumindest ein an einem Gestänge der Spritze angeordnetes Ausbringelement auf einem Pflanzenbestand der landwirtschaftlichen Nutzfläche ausgebracht, wobei zumindest eine Oberfläche des Pflanzenbestands, insbesondere zumindest einer Nutzpflanze, zumindest teilweise mit Spritzmittel benetzt wird. Die zumindest eine Oberfläche wird in einem benetzten Zustand mittels zumindest einer ersten Sensoreinrichtung erfasst. Hierbei wird außerdem der zumindest eine Einstellparameter in Abhängigkeit der mittels der zumindest einen ersten Sensoreinrichtung erfassten Oberfläche von dem Steuer- und/oder Regelsystem angepasst.

Nachteilig an derartigen Verfahren ist unter anderem, dass eine solche Erfassung der Benetzung sich zumindest nahezu ausschließlich auf die erreichte und/oder resultierende Benetzung der zumindest einen Oberfläche im benetzten Zustand konzentriert. Aufgrund von Schwankungen unterschiedlicher Eigenschaften entlang der zumindest einen Oberfläche selbst, mehrerer Oberflächen zueinander und/oder unterschiedlicher Rahmenbedingungen auf und/oder in unmittelbarer Nähe der zumindest einen Oberfläche, weisen derartig zu behandelnde und/oder zu benetzende Oberflächen unterschiedliche Ausgangsbedingungen auf. Da gattungsgemäß Spritzmittel besonders fein auf derartigen Oberflächen aufgetragen wird, setzt ein solches Erfassungsverfahren eine besonders feine Auflösungen und/oder Feinabstimmung derartiger Sensoreinrichtungen zur Erfassung der Benetzung voraus. Da bisher bekannt Erfassungsverfahren von zumindest nahezu gleichen Ausgangsbedingungen, insbesondere mehrerer Oberflächen zueinander, ausgehen, liefern derartig ausgeführte Verfahren unbefriedigende Ergebnisse sowohl in der Erfassung als auch in der darauf basierenden Anpassung der Benetzung.

Die der Erfindung zugrunde liegende Aufgabe besteht somit darin, ein Verfahren zum Ausbringen von Spritzmittel mit verbesserter Erfassung der Benetzung bereitzustellen. Insbesondere soll somit eine verbesserte, insbesondere genauere, Anpassung der Benetzung während des Ausbringvorgangs erreicht werden.

Diese Aufgabe wird erfindungsgemäß dadurch gelöst, dass die zumindest eine Oberfläche in einem unbenetzten Zustand erfasst und/oder vorgegeben wird; und dass eine tatsächliche Benetzung der zumindest einen Oberfläche unter Berücksichtigung des benetzten und unbenetzten Zustands ermittelt wird.

**Im Folgenden bezeichnen die Begriffe "unbenetzt" und/oder "unbenetzter Zustand", sofern nicht anders explizit angegeben,** einen Ausgangszustand zumindest einer Oberfläche vor einer bestimmungsgemäßen Behandlung und/oder Beauftragung mit Spritzmittel. Mit anderen Worten kann dies bedeuten, dass hierbei noch keine direkte und/oder unmittelbare Aufbringung von Spritzmittel auf der Oberfläche über zumindest ein Ausbringelement stattgefunden hat. Insbesondere kann dies jedoch auch bedeuten, dass eine derartige Oberfläche zumindest teilweise, insbesondere unvollständig, und/oder durch abgedriftetes Spritzmittel, insbesondere aufgrund von Luftbewegungen, aus einem vorausgegangenen Ausbringvorgang, insbesondere aus einer benachbarten Fahrgasse heraus, bereits benetzt ist. Ferner kann dies auch eine zumindest teilweise durch Tau, insbesondere Feuchtigkeit, und/oder Verschmutzungen bedeckte Oberfläche bedeuten.

Weiterhin ist im Folgenden, sofern nicht anders explizit angegeben, unter einem "Einstellparameter" eine Einstellung und/oder Parametrierung zu verstehen, die einen Durchfluss, insbesondere eine Durchflussmenge, eine Ausbringmenge und/oder einen Druck innerhalb des zumindest einen Fördersystems, Ausbringelements und/oder im Bereich des Ausbringelements zumindest teilweise beeinflusst. Insbesondere ist hierunter eine Einstellung und/oder Parametrierung zu verstehen, die eine Ausbringrichtung, insbesondere Ausrichtung und/oder einen Winkel zumindest eines Ausbringelements und/oder eine Austrittsrichtung des Spritzmittels beeinflusst. Darüber hinaus ist hierbei vorzugsweise eine Einstellung und/oder Parametrierung zu verstehen, die ein ausbringbares Tröpfchenspektrum und/oder eine ausbringbare Austrittsgeschwindigkeit des Spritzmittels aus dem zumindest einem Ausbringelement beeinflusst.

Infolge der erfindungsgemäßen Maßnahme wird bei der Ermittlung der tatsächlichen Benetzung sowohl die zumindest eine Oberfläche im benetzten Zustand als auch die zumindest eine Oberfläche in einem unbenetzten Zustand berücksichtigt. Bei der zumindest einen Oberfläche im benetzten Zustand und der zumindest einen Oberfläche im unbenetzten Zustand, kann es sich um dieselbe Oberfläche in zwei unterschiedlichen Zuständen und/oder um separate, insbesondere voneinander abweichende, Oberflächen in unterschiedlichen Zuständen handeln. Bevorzugt wird die Oberfläche im unbenetzten Zustand, insbesondere sensorisch, erfasst. Alternativ oder zusätzlich ist die Oberfläche im unbenetzten Zustand von einem Bediener, insbesondere mittels einem der landwirtschaftlichen Spritze zugeordneten Bedien- und/oder Anzeigemittels, auswählbar und/oder vorgebbar. Dabei wird bevorzugt zumindest eine, insbesondere für die Benetzung relevante, Oberflächen- und/oder Pflanzeninformation der Oberfläche abgerufen und/oder vorgegeben.

Die zumindest eine erste Sensoreinrichtung zur Erfassung der zumindest einen Oberfläche im benetzten Zustand ist bevorzugt dem Steuer und/oder Regelsystem der landwirtschaftlichen Spritze zugeordnet. Besonders bevorzugt ist zumindest eine an der landwirtschaftlichen Spritze, insbesondere am Gestänge und/oder in Fahrtrichtung hinter den Ausbringelementen, angeordnete erste Sensoreinrichtung.

Die tatsächliche Benetzung stellt hierbei bevorzugt einen mittels des Steuerund/oder Regelsystems berechneten Wert dar, der insbesondere in Abhängigkeit der zumindest einen Oberfläche im benetzten Zustand als auch der zumindest einen Oberfläche im unbenetzten Zustand bestimmt wird. Alternativ oder zusätzlich stellt die mittels der zumindest einen ersten Sensoreinrichtung erfasste Oberfläche im benetzen Zustand die tatsächliche Benetzung dar, wobei vor und/oder während der Erfassung zumindest ein Erfassungsparameter der zumindest einen ersten Sensoreinrichtung, insbesondere in Abhängigkeit der Oberfläche im unbenetzten Zustand, angepasst wird. Ein Erfassungsparameter kann hierbei eine Einstellung und/oder Parametrierung der zumindest einen ersten Sensoreinrichtung bedeuten, bei der vorzugsweise ein Fokus, ein Erfassungsfeld, insbesondere die Größe und/oder Ausrichtung eines Erfassungsfelds, eine Messmethode, ein Messbereich, insbesondere ein Wellen- und/oder Spektralbereich, ein Signalfilter und/oder eine Empfindlichkeit unter Berücksichtigung der Oberfläche im unbenetzten Zustand angepasst wird.

Vorzugsweise wird die tatsächliche Benetzung dem Bediener auf einem der landwirtschaftlichen Spritze zugeordneten Bedien- und/oder Anzeigemittel angezeigt. Alternativ oder zusätzlich wird die tatsächliche Benetzung auf einem lokalen Speicherträger, der insbesondere dem Steuer- und/oder Regelsystem zugeordnet ist, abgespeichert und/oder an eine dezentrale Rechnereinheit, insbesondere einen Server, übermittelt. Somit können in der Vergangenheit angewendete Einstellparameter und/oder die damit zusammenhängende tatsächlich erreichte Benetzung bei zukünftigen Ausbringvorgängen berücksichtigt werden.

Mittels der erfindungsgemäßen Ausführungsform ist somit die Berücksichtigung unterschiedlicher Ausgangsbedingungen der benetzen Oberflächen, insbesondere des Pflanzenbestands, ermöglicht und damit eine besonders genaue Erfassung der Benetzung erreicht.

In einer bevorzugten Ausführungsform des erfindungsgemäßen Verfahrens wird der zumindest eine Einstellparameter in Abhängigkeit der tatsächlichen Benetzung angepasst. Vorzugsweise wird hierbei der zumindest eine Einstellparameter manuell von einem Bediener, insbesondere mittels eines Bedien- und/oder Anzeigemittels, und/oder automatisiert von dem Steuer- und/oder Regelsystem, vorzugsweise unter Berücksichtigung einer hinterlegten Applikationskarte, vorgegeben und/oder abgerufen. Dabei wird vom Bediener und/oder dem Steuerund/oder Regelsystem insbesondere die tatsächliche Benetzung berücksichtigt und der Einstellparameter zumindest teilweise angepasst. Vorzugsweise ist vorgesehen, dass der zumindest eine Einstellparameter dabei anhand vorgeschlagener und/oder empfohlener Einstellparameter vom Steuer- und/oder Regelsystem und/oder vom Bediener angepasst wird. Diese Ausführungsform erlaubt eine besonders genaue und damit verbesserte Anpassung des zumindest einen Einstellparameters und damit des Ausbringvorgangs.

Besonders bevorzugt sind die Ausbringelemente und/oder die dazu zugeordneten Einrichtungen des Fördersystems, wie beispielsweise Ventileinrichtungen, anhand von pulsweitenmodulierten Signalen ansteuerbar und/oder regelbar. Dabei sind die Ausbringelemente und/oder Ventileinrichtungen in bekannter Weise als PWM-Spritzdüsen und/oder PWM-Ventile ausgebildet, wobei neben der Pulsweite bzw. Pulsdauer besonders bevorzugt auch die Pulsfrequenz anpassbar ist. Vorzugsweise sind dabei, über den zumindest einen Einstellparameter, die Pulsweite und/oder Pulsfrequenz und damit insbesondere ein Tropfenspektrum, insbesondere die Größe und/oder räumliche Verteilung der Tröpfchen, des ausbringbaren Spritzmittels individuell und/oder bedarfsgerecht anpassbar.

Alternativ oder zusätzlich können auch andere, insbesondere für landwirtschaftliche Spritzen bekannte, Arten von Ausbringelementen, insbesondere Spritzdüsen, an der Spritze angeordnet sein und für die Ausbringung des Spritzmittels und damit zur Benetzung der zumindest einen Oberfläche verwendet werden.

In einer Weiterbildung des erfindungsgemäßen Verfahrens wird die zumindest eine Oberfläche im unbenetzten Zustand mittels zumindest einer zweiten, vorzugsweise optischen, Sensoreinrichtung erfasst. Als zweite Sensoreinrichtung ist dabei vorzugsweise zumindest ein zur Ermittlung einer Oberflächen- und/oder Pflanzeninformation geeigneter Sensor vorgesehen. Vorzugsweise ist der zumindest eine Sensor als Infrarot-Sensor, insbesondere als eine Kamera, ausgebildet der dazu eingerichtet ist, die Temperatur entlang der zumindest einen unbenetzten Oberfläche zu erfassen. Alternativ oder zusätzlich umfasst die zweite Sensoreinrichtung zumindest einen Sensor der dazu eingerichtet ist, zumindest eine weitere Oberflächen- und/oder Pflanzeninformation, beispielsweise in Form einer Feuchtigkeit, einer Oberflächenstruktur und/oder eines Farbtons, insbesondere zumindest eines Farbanteils, entlang der zumindest einen Oberfläche, insbesondere des Blatts und/oder Pflanzenstängels, zu erfassen. Ferner umfasst die zweite Sensoreinrichtung alternativ oder zusätzlich zumindest einen berührungsempfindlichen Sensor, insbesondere Tastsensor, zur Erfassung zumindest einer Oberflächen- und/oder Pflanzeninformation und/oder zumindest einen Sensor zur Erfassung von Umgebungsbedingungen, insbesondere in unmittelbarer Nähe der zumindest einen Oberfläche. Als erfassbare Umgebungsbedingungen sind hierbei, eine Umgebungstemperatur, ein Umgebungsdruck, eine Umgebungsfeuchtigkeit, Luftbewegungen, insbesondere in Form von Wind und/oder Thermik, und dazu ähnlichen Informationen denkbar.

Die zumindest eine zweite Sensoreinrichtung ist hierbei bevorzugt an der landwirtschaftlichen Spritze, insbesondere in einer Fahrtrichtung, vor den Ausbringelementen, insbesondere Spritzdüsen, und/oder an einem der Spritze zugeordneten landwirtschaftlichen Schlepper angeordnet. Alternativ oder zusätzlich ist eine unbemannte Flugvorrichtung, insbesondere in Form einer Drohne, und/oder eine auf und/oder neben der landwirtschaftlichen Nutzfläche befindliche Messvorrichtung denkbar, an der die zumindest eine und/oder eine weitere zweite Sensoreinrichtung angeordnet ist. Das Steuer- und/oder Regelsystem ist dabei bevorzugt dazu eingerichtet, sowohl die mittels der zweiten Sensoreinrichtung erfassten Oberflächen- und/oder Pflanzeninformationen, als auch die mittels zumindest einer weiteren zweiten Sensoreinrichtung erfassten Oberflächen- und/oder Pflanzeninformationen zur Erfassung und/oder Ermittlung der zumindest einen Oberfläche im unbenetzten Zustand zu berücksichtigen. Des Weiteren ist denkbar, dass die zumindest eine weitere zweite Sensoreinrichtung, insbesondere die damit erfassten Oberflächen- und/oder Pflanzeninformationen, zur Kalibrierung der zumindest einen, insbesondere an der Spritze angeordneten, zweiten Sensoreinrichtung verwendet und/oder berücksichtigt wird. Ferner ist denkbar, dass die mittels der zumindest einen weiteren zweiten Sensoreinrichtung erfassten Oberflächen- und/oder Pflanzeninformationen ortsbasiert, insbesondere GPS basiert, erfasst werden.

Mit einer derartigen Ausführungsform können die Ausgangsbedingungen, insbesondere die Oberflächen- und/oder Pflanzeninformationen, der zumindest einen Oberfläche automatisiert und während, vorzugsweise des gesamten, Ausbringvorgangs erfasst und/oder berücksichtigt werden. Insbesondere fehlerhafte Vorgaben durch einen Bediener sind somit zumindest nahezu ausgeschlossen.

In einer anderen bevorzugten Ausführungsform des erfindungsgemäßen Verfahrens wird zur Ermittlung der tatsächlichen Benetzung der benetzte und unbenetzte Zustand der zumindest einen Oberfläche miteinander verglichen, vorzugsweise wird eine Abweichung des benetzten Zustands zum unbenetzten Zustand ermittelt. Das Steuer- und/oder Regelsystem berücksichtigt hierbei zur Ermittlung der tatsächlichen Benetzung neben dem erfassten benetzten als auch unbenetzten Zustand der zumindest einen Oberfläche bevorzugt auch zumindest eine Umgebungsbedingung, wie beispielsweise die Umgebungstemperatur, Umgebungsfeuchtigkeit, den Umgebungsdruck und/oder Luftbewegungen. Vorzugsweise wird für den Vergleich auch der zumindest eine aktuell eingestellte Einstellparameter, insbesondere das ausgebrachte und damit das zu erwartende Tropfenspektrum des Spritzmittels, vom Steuer- und/oder Regelsystem, insbesondere für die Erfassung der benetzten Oberfläche, berücksichtigt. Besonders bevorzugt wird dabei eine Abweichung, insbesondere in Form einer Differenz der Temperaturen, des Farbtons und/oder Oberflächenstruktur, zwischen der zumindest einen Oberfläche in unterschiedlichen Zuständen ermittelt. Des Weiteren wird dabei vorzugsweise eine zeitliche Differenz zwischen den beiden Zuständen der zumindest einen Oberfläche berücksichtigt. Insbesondere werden somit die tatsächlichen Auswirkungen der eingestellten Einstellparameter auf die Benetzung ermittelt und vom Steuer- und/oder Regelsystem während des Ausbringvorgangs berücksichtigt.

In einer anderen Weiterbildung des erfindungsgemäßen Verfahrens wird die tatsächliche Benetzung mit einer abrufbaren und/oder vorgebbaren Sollbenetzung der zumindest einen Oberfläche verglichen. Vorzugsweise wird der zumindest eine Einstellparameter in Abhängigkeit einer Abweichung der tatsächlichen Benetzung zu einer Sollbenetzung der zumindest einen Oberfläche angepasst. Die Sollbenetzung stellt dabei eine von dem Bediener und/oder dem Steuer- und/oder Regelsystem abrufbare und/oder vorgebbare Benetzung der zumindest einen Oberfläche dar. Vorzugsweise wird die Sollbenetzung unter Berücksichtigung des zumindest einen Einstellparameters, zumindest eines Ausbringelements berechnet und/oder bestimmt. Alternativ oder zusätzlich wird zur Berechnung und/oder Bestimmung der Sollbenetzung eine Applikationskarte, insbesondere der Spritzmittelbedarf zumindest einer Oberfläche wenigstens einer Nutzpflanze und/oder einer Teilfläche, berücksichtigt. Alternativ oder zusätzlich wird eine in der Vergangenheit erreichte Benetzung der zumindest einen Oberfläche berücksichtigt. Des Weiteren wird besonders bevorzugt das ausgebrachte Spritzmittel, insbesondere zumindest eine die Benetzung beeinflussende Eigenschaft bzw. Benetzungseigenschaft des Spritzmittels, wie beispielsweise eine Oberflächenspannung, Haftfähigkeit usw., zur Berechnung und/oder Bestimmung der Sollbenetzung berücksichtigt. Außerdem ist bevorzugt, dass bei einer Abweichung der tatsächlichen Benetzung zur Sollbenetzung der Bediener visuell und/oder akustisch alarmiert und/oder informiert wird, wobei eine erlaubte und/oder unerlaubte Abweichung bzw. ein Toleranzbereich vorgebbar ist. Mittels einer derartigen Ausführungsform ist eine besonders einfache und/oder genaue Ergebniskontrolle der tatsächlich erreichten Benetzung möglich.

In einer weiteren bevorzugten Ausführungsform des erfindungsgemäßen Verfahrens wird zumindest eine Nutzpflanze aus dem Pflanzenbestand, vorzugsweise eine Art, Größe und/oder ein Entwicklungsstadium der zumindest einen Nutzpflanze, erfasst und/oder vorgegeben. Außerdem wird die Sollbenetzung in Abhängigkeit der erfassten und/oder vorgegebenen Nutzpflanze, insbesondere dessen Art, Größe und/oder Entwicklungsstadium, ermittelt und/oder vorgegeben. Die Nutzpflanze kann hierbei manuell von dem Bediener und/oder automatisiert durch das Steuer- und/oder Regelsystem erkannt und/oder vorgegeben werden. Hierbei kann die Nutzpflanze, insbesondere dessen Art, Größe und/oder ein Entwicklungsstadium, vorgegeben werden, wobei anhand der Vorgabe zumindest eine dazu zugeordneten Oberflächen- und/oder Pflanzeninformation, insbesondere Benetzungseigenschaft, abgerufen und/oder bestimmt wird. Alternativ oder zusätzlich kann die zumindest eine Oberflächen-und/oder Pflanzeninformation, insbesondere Benetzungseigenschaft, manuell von dem Bediener ausgewählt und/oder eingegeben werden. Die Oberflächen-und/oder Pflanzeninformation kann hierbei die Eigenschaften der zumindest einen Oberfläche, insbesondere dessen Benetzbarkeit, Polarität, Emissionsgrad und/oder Rauigkeit berücksichtigen.

Darüber hinaus ist denkbar, dass die zumindest eine Eigenschaft, insbesondere die Benetzbarkeit, Polarität, der Emissionsgrad und/oder die Rauigkeit der zumindest einen Oberfläche und/oder die Benetzungseigenschaft des Spritzmittels mittels der Spritze, insbesondere mittels eines chemischen und/oder elektrochemischen Verfahrens während des Ausbringvorgangs, beeinflusst wird.

Besonders bevorzugt wird die zumindest eine Nutzpflanze mittels der zumindest einen ersten und/oder zweiten Sensoreinrichtung erfasst. Alternativ oder zusätzlich ist zumindest eine dritte Sensoreinrichtung zur Erfassung der Nutzpflanze, insbesondere deren Art, Größe und/oder Entwicklungsstadiums, denkbar.

In einer anderen weiteren bevorzugten Ausführungsform des erfindungsgemäßen Verfahrens wird zumindest ein unterer und/oder oberer Grenzwert der Sollbenetzung ermittelt und/oder vorgegeben, wobei die tatsächliche Benetzung mit dem zumindest einen unteren und/oder oberen Grenzwert der Sollbenetzung verglichen wird. Des Weiteren wird ein Bediener informiert und/oder alarmiert, wenn der zumindest eine untere und/oder obere Grenzwert der Sollbenetzung von der tatsächlichen Benetzung überschritten wird. Der untere und/oder obere Grenzwert wird hierbei bevorzugt automatisiert vom Steuer- und/oder Regelsystem in Abhängigkeit des Pflanzenbestands, insbesondere der Nutzpflanze, des Spritzmittels und/oder der Einstellparameter bestimmt. Alternativ oder zusätzlich kann der zumindest eine untere und/oder obere Grenzwert manuell vom Bediener angepasst und/oder vorgegeben werden. Hierbei kann beispielsweise zumindest ein unterer Grenzwert, unterhalb dem die zumindest eine Oberfläche als zu gering benetzt eingestuft wird, und/oder zumindest ein oberer Grenzwert, oberhalb dem die zumindest eine Oberfläche als zu stark benetzt eingestuft wird, vorgegeben werden. Besonders bevorzugt werden zumindest ein unterer und zumindest ein oberer Grenzwert der Sollbenetzung vorgegeben, wobei der Bediener informiert und/oder alarmiert wird, wenn die tatsächliche Benetzung außerhalb des vom unteren und oberen Grenzwerts aufgespannten Bereiches liegt. Alternativ oder zusätzlich ist denkbar, dass nur ein unterer oder oberer Grenzwert der Sollbenetzung vorgegeben wird. Die Visualisierung und/oder Alarmierung wird bevorzugt visuell und/oder akustisch, insbesondere über ein Bedien- und/oder Anzeigemittel, ausgeführt. Eine derartige Ausführungsform erlaubt eine noch weiter vereinfachte und/oder verbesserte Ergebniskontrolle der Benetzung.

Bei einer besonders bevorzugten Ausführungsform wird der zumindest eine untere und/oder obere Grenzwert der Sollbenetzung auf der Basis einer von den Einstellparametern abhängigen und zu erwartenden, insbesondere tatsächlichen, Benetzung bestimmt.

In einer weiteren Weiterbildung des erfindungsgemäßen Verfahrens wird das Spritzmittel vor dem Ausbringen zumindest teilweise aufbereitet, vorzugsweise temperiert. Hierbei wird das Spritzmittel innerhalb des zumindest einen Vorratsbehälters und/oder entlang des Fördersystems, vorzugsweise im Bereich der Ausbringelemente, aufbereitet. Die Aufbereitung kann ferner Abschnittsweise, insbesondere für eine Gruppe von Ausbringelementen, und/oder individuell für zumindest ein Ausbringelement erfolgen. Je nach Ausführungsform der ersten und/oder zweiten Sensoreinrichtung, insbesondere deren Messverfahren, kann das Spritzmittel in unterschiedlicher Weise aufbereitet werden. Vorzugsweise kann dem Spritzmittel zumindest ein zusätzlicher Stoff, insbesondere Farbstoff oder Tracer, zugegeben werden, wobei ein fluoreszierender Stoff, insbesondere Uranin, besonders bevorzugt ist. Darüber hinaus wird das Spritzmittel während der Aufbereitung vorzugsweise temperiert, insbesondere gekühlt oder erhitzt. Die Aufbereitung erfolgt dabei derart, dass eine Differenz, insbesondere ein Kontrast, zwischen der zumindest einen Oberfläche und dem aufgebrachten Spritzmittel besonders groß ist und somit die Benetzung von der zumindest einen ersten Sensoreinrichtung besser erfassbar ist.

Alternativ oder zusätzlich ist dem Spritzmittel ein zumischbarer Stoff denkbar, der dazu eingerichtet ist, die Benetzungseigenschaften des Spritzmittels und/oder der zumindest einen Oberfläche, und somit die Benetzung zu beeinflussen. Somit ist das erreichbare Benetzungsergebnis in besonderer Weise verbessert.

Darüber hinaus ist ein erfindungsgemäßes Verfahren bevorzugt bei dem wenigstens eine Temperatur der zumindest einen Oberfläche im unbenetzten Zustand und/oder der, insbesondere unmittelbaren, Umgebung erfasst und/oder vorgegeben wird. Darüber hinaus wird das Spritzmittel in Abhängigkeit der erfassten und/oder vorgegebenen Temperatur aufbereitet, insbesondere temperiert. Hierbei wird bevorzugt die Temperatur an zumindest einer Position, insbesondere mehreren Positionen, entlang der zumindest einen unbenetzten Oberfläche erfasst. In einer weiteren bevorzugten Ausführungsform wird alternativ oder zusätzlich zumindest eine Temperatur der Umgebung, insbesondere in unmittelbarer Nähe der zumindest einen Oberfläche, erfasst. Ferner ist denkbar, dass die Temperatur der zumindest einen Oberfläche und/oder der Umgebung manuell von einem Bediener vorgegeben und/oder abgerufen werden. Die von der zumindest einen Oberfläche und/oder der Umgebung erfasste und/oder vorgegebene Temperatur wird anschließend bei der Aufbereitung, insbesondere der Temperierung, des Spritzmittels berücksichtigt. Besonders vorteilhaft ist dabei, wenn das ausgebrachte Spritzmittel, insbesondere die Temperatur des Spritzmittels, eine besonders hohe Differenz zur zumindest einen unbenetzten Oberfläche und/oder der Umgebung aufweist.

Vorzugsweise umfasst die landwirtschaftliche Spritze zumindest einen innerhalb des Vorratsbehälters und/oder des Fördersystems angeordneten Sensor, der dazu eingerichtet ist, die Temperatur und/oder die Benetzungseigenschaften des Spritzmittels, vorzugsweise die Bestandteile, zu erfassen.

In einer anderen bevorzugten Ausführungsform des erfindungsgemäßen Verfahrens wird die zumindest eine Oberfläche während der Erfassung wenigstens teilweise mittels zumindest einer Beleuchtungseinheit beleuchtet. Die zumindest eine Oberfläche wird hierbei besonders bevorzugt im benetzten Zustand beleuchtet, wobei eine alternative oder zusätzliche Beleuchtung der zumindest einen Oberfläche im unbenetzten Zustand ebenfalls denkbar ist. Die Beleuchtung, insbesondere die Helligkeit der Beleuchtung, wird vorzugsweise in Abhängigkeit der Umgebung, insbesondere der Umgebungshelligkeit im Bereich der zumindest einen Oberfläche, angepasst. Mittels einer derartigen Ausführungsform kann die Erfassung der Benetzung auch bei wechselnden Wetterbedingungen, Tageszeiten und/oder in beschatteten Bereichen auf der landwirtschaftlichen Nutzfläche, insbesondere dem Pflanzenbestand, verbessert werden. Darüber hinaus kann die zumindest eine Beleuchtungseinheit derart ausgebildet sein, dass ein dem Spritzmittel zugegebener Stoff zumindest teilweise mit dem Licht der Beleuchtungseinheit, insbesondere nach Art der Fluoreszenz, reagiert. Somit ist der Kontrast zwischen dem ausgebrachten Spritzmittel und der zumindest einen benetzten Oberfläche gesteigert und somit die Erfassung der Benetzung mittels der zumindest einen ersten Sensoreinrichtung noch weiter verbessert.

Bei einer besonders bevorzugten Ausführungsform des erfindungsgemäßen Verfahrens wird das zumindest eine Ausbringelement in Abhängigkeit eines dem Ausbringelement zugeordneten Benetzungsparameters und/oder der tatsächlichen Benetzung aktiviert. Das zumindest eine Ausbringelement ist dabei bevorzugt als Mehrfachdüsenkörper, insbesondere mit mehreren daran angeordneten Spritzdüsen unterschiedlicher Größe, ausgebildet. Vorzugsweise sind die mehreren Spritzdüsen zumindest eines Ausbringelementes an zumindest nahezu derselben Position entlang des Gestänges angeordnet. Besonders bevorzugt ist dabei jedem Ausbringelement, insbesondere jeder an einem Ausbringelement angeordneten Spritzdüse, zumindest ein Benetzungsparameter zugeordnet. Der Benetzungsparameter stellt dabei bevorzugt einen experimentell und/oder theoretisch bestimmten Zusammenhang zwischen dem zumindest einen Ausbringelement und dem zumindest einen Einstellparameter, der Umgebungsbedingungen und/oder den Benetzungseigenschaften des Spritzmittels und/oder der zumindest einen Oberfläche dar. Vorzugsweise wird mit dem Benetzungsparameter das in Abhängigkeit zumindest eines Einstellparameters erreichbare Tropfenspektrum und/oder die Verteilung der Tröpfchen mittels dem zumindest einen Ausbringelement berücksichtigt. Besonders vorzugsweise wird mit dem Benetzungsparameter die Eindringtiefe des Spritzmittels, insbesondere in Richtung des Ackerbodens, und damit die erreichbare Benetzung von Oberflächen sowohl in oberen als auch unteren Regionen der Nutzpflanze berücksichtigt. Ebenso kann mittels des Benetzungsparameters eine erreichbare Verwirbelung des Spritzmittels in Abhängigkeit des Ausbringelements berücksichtigt werden. Der zumindest eine Benetzungsparameter wird besonders bevorzugt in Form einer, insbesondere von dem Ausbringelement abhängig hinterlegten, Funktionskurve abgerufen und/oder vorgegeben. Alternativ oder zusätzlich wird zur Aktivierung eines geeigneten Ausbringelements, insbesondere einer Spritzdüse, die Abweichung zwischen der tatsächlich erreichten Benetzung und der Sollbenetzung der zumindest einen Oberfläche berücksichtigt. Hierbei wird vorzugsweise vom Steuer- und/oder Regelsystem und/oder dem Bediener überprüft, in wie weit die erforderliche Sollbenetzung der zumindest einen Oberfläche mit dem zumindest einen aktuell aktivierten Ausbringelement, insbesondere Spritzdüse, erreicht ist.

In einer besonders bevorzugten Weiterbildung des erfindungsgemäßen Verfahrens wird die Oberfläche im benetzten Zustand in Abhängigkeit des zumindest einen aktivierten Ausbringelements erfasst. Hierbei wird auf Basis der zu erwartenden Benetzung, die insbesondere durch die Benetzungsparameter des zumindest einen aktivierten Ausbringelements vorgegeben ist, der zumindest eine Erfassungsparameter der zumindest einen ersten Sensoreinrichtung angepasst.

Bei einer weiteren besonders bevorzugten Ausführungsform des erfindungsgemäßen Verfahrens wird zumindest ein, insbesondere vom Pflanzenbestand abhängiger, Basis-Einstellparameter und Grenz-Einstellparameter abgerufen und/oder vorgegeben, wobei der zumindest eine Einstellparameter in Abhängigkeit der mittels der ersten Sensoreinrichtung erfassten Oberfläche zwischen dem Basis-Einstellparameter und Grenz-Einstellparameter angepasst wird. Der zumindest eine Basis-Einstellparameter wird dabei vom manuell vom Bediener und/oder automatisiert, insbesondere in Abhängigkeit einer Applikationskarte, vom Steuer- und/oder Regelsystem abgerufen und/oder vorgegeben. Ferner wird der zumindest eine Grenz-Einstellparameter, insbesondere ein Toleranzbereich des Einstellparameters, vom Bediener und/oder dem Steuer- und/oder Regelsystem in Abhängigkeit des Pflanzenbestands, der Benetzungseigenschaften des Spritzmittels und/oder der zumindest einen Oberfläche, den Umgebungsbedingungen und/oder des Ausbringelements abgerufen und/oder vorgegeben. Der zumindest eine Einstellparameter kann somit während des Ausbringvorgangs zwischen dem Basis-Einstellparameter und dem Grenz-Einstellparameter, insbesondere innerhalb des Toleranzbereichs, angepasst werden. Besonders bevorzugt kann ein oberer und unterer Grenz-Einstellparameter abgerufen und/oder vorgegeben werden, der die möglichen Einstellparameter ausgehend vom Basis-Einstellparameter nach oben und unten hin begrenzt. Diese Ausführungsform erlaubt auch bei einer fehlerhaften Erfassung der Benetzung, insbesondere aufgrund zumindest einer defekten und/oder verschmutzten ersten und/oder zweiten Sensoreinrichtung, eine besonders betriebssichere Benetzung, insbesondere Ausbringung des Spritzmittels.

Die der Erfindung zugrunde liegende Aufgabe wird ebenso mit einer landwirtschaftlichen Spritze zum Ausbringen von Spritzmittel gelöst, wobei mittels der erfindungsgemäßen landwirtschaftliche Spritze eine tatsächliche Benetzung der zumindest einen Oberfläche unter Berücksichtigung des benetzten Zustands und einem erfassbaren und/oder vorgebbaren unbenetzten Zustand der zumindest einen Oberfläche ermittelbar ist. Hinsichtlich der Vorteile und Modifikationen der erfindungsgemäßen landwirtschaftlichen Spritze wird zunächst auf die Vorteile und Modifikationen des erfindungsgemäßen Verfahrens verwiesen.

Erfindungsgemäß umfasst die landwirtschaftliche Spritze zumindest ein daran angeordnetes, insbesondere quer zu einer Fahrtrichtung, ausklappbares Gestänge. Innerhalb der Spritze ist zumindest ein spritzmittelleitendes und/oderförderndes Fördersystem angeordnet. Darüber hinaus sind mehrere Ausbringelemente, insbesondere Spritzdüsen, nebeneinander entlang des Gestänges angeordnet und dazu eingerichtet, das Spritzmittel auf der Basis zumindest eines Einstellparameters auf einem Pflanzenbestand einer landwirtschaftlichen Nutzfläche auszubringen, wobei zumindest eine Oberfläche des Pflanzenbestands zumindest teilweise mit dem Spritzmittel benetzbar ist. Zumindest eine erste, vorzugsweise der landwirtschaftlichen Spritze zugeordnete, erste Sensoreinrichtung ist dazu eingerichtet, die zumindest eine Oberfläche in einem benetzten Zustand zu erfassen. Darüber hinaus ist der landwirtschaftlichen Spritze zumindest ein Steuer- und/oder Regelsystem zugeordnet das dazu eingerichtet ist, den zumindest einen Einstellparameter in Abhängigkeit der mittels der ersten Sensoreinrichtung erfassten Oberfläche anzupassen.

In einer bevorzugten Ausführungsform der erfindungsgemäßen Spritze ist der zumindest eine Einstellparameter in Abhängigkeit der tatsächlichen Benetzung anpassbar.

In einer bevorzugten Weiterbildung der erfindungsgemäßen Spritze ist der unbenetzte Zustand der zumindest einen Oberfläche mittels zumindest einer zweiten Sensoreinrichtung erfassbar. Die Zumindest eine zweite Sensoreinrichtung ist bevorzugt in Fahrtrichtung vor dem zumindest einen Ausbringelementen, insbesondere der Spritzdüse, angeordnet. Besonders bevorzugt ist die zumindest eine zweite Sensoreinrichtung an der Spritze, insbesondere am Gestänge, und/oder an einem der Spritze zugeordneten Schlepper angeordnet. Die zweite Sensoreinrichtung ist vorzugsweise als berührungsloser Sensor, insbesondere Infrarot-, 3D-, CCD-, Dioden- und/oder spektroskopischer Sensor und/oder Kamera ausgebildet. Die Sensoreinrichtung ist insbesondere dazu eingerichtet, die zumindest eine Oberfläche, vorzugsweise mehrere Oberflächen, in einem unbenetzten Zustand berührungslos zu erfassen. Die zumindest eine zweite Sensoreinrichtung ist über eine kabelgebunden und/oder kabellos signalübertragende Verbindung mit dem Steuer- und/oder Regelsystem der landwirtschaftlichen Spritze und/oder eines dazu zugeordneten Schleppers gekoppelt.

In einer weiteren bevorzugten Weiterbildung der erfindungsgemäßen Spritze ist die zumindest eine erste Sensoreinrichtung und/oder zumindest eine zweite Sensoreinrichtung als Radarsensor ausgebildet. Der zumindest eine Radarsensor ist dazu eingerichtet, zumindest ein Signal, insbesondere in Form von elektromagnetischen Wellen, zu emittieren und wenigstens ein von der zumindest einen Oberfläche zumindest teilweise reflektiertes Signal zu empfangen. Ferner ist der zumindest eine Radarsensor und/oder das Steuer- und/oder Regelsystem dazu eingerichtet, eine Abweichung auf der Basis des emittierten und reflektierten Signals zu erfassen und/oder zu bestimmen. Beispielsweise kann die Abweichung hierbei aus einer zumindest teilweisen Absorption, insbesondere Beeinflussung, des emittierten Signals durch die zumindest eine benetzte und/oder unbenetzte Oberfläche resultieren. Diese bevorzugte Weiterbildung macht sich die Erkenntnis zu Nutze, dass das emittierte Signal, insbesondere die elektromagnetischen Wellen, je nach Benetzung der zumindest einen Oberfläche unterschiedlich stark reflektiert und/oder absorbiert und die Signale somit unterschiedlich stark von der zumindest einen Oberfläche beeinflusst werden. In einer besonders bevorzugten Weiterbildung ist die zumindest eine erste und zweite Sensoreinrichtung jeweils als zumindest ein Radarsensor ausgebildet, wobei die Signale der ersten und zweiten Sensoreinrichtung zumindest teilweise miteinander vergleichbar sind. Mittels einer derartigen Ausführungsform ist die Benetzung der zumindest einen Oberfläche mit besonders einfachen Mitteln bestimmbar. Alternativ oder zusätzlich zu dem Radarsensor sind hierbei auch andere Arten von Sensoren denkbar, die dazu eingerichtet sind, elektromagnetische Wellen zu emittieren und/oder zu empfangen.

Bevorzugt ist außerdem eine erste und/oder zweite Sensoreinrichtung die nach Art eines berührungslosen Sensors mit Terahertz-Technologie ausgebildet ist. Vorzugsweise ist ein derart ausgebildeter Sensor dazu eingerichtet, die zumindest eine Oberfläche durch ein emittieren und/oder empfangen von elektromagnetischen Wellen mit einem Frequenzbereich zwischen 100 GHz und 10 THz zu erfassen. Eine derartige Ausführungsform erlaubt eine besonders leistungsfähige Erfassung, insbesondere mit besonders hoher Auflösung, der zumindest einen Oberfläche im benetzten und/oder unbenetzten Zustand. In einer anderen bevorzugten Ausführungsform der erfindungsgemäßen Spritze ist die zumindest eine zweite Sensoreinrichtung in einer Fahrtrichtung vor der zumindest einen ersten Sensoreinrichtung an der landwirtschaftliche Spritze angeordnet ist. Die erste Sensoreinrichtung ist hierbei dazu eingerichtet, während eines Ausbringvorgangs die zumindest eine bereits benetzte Oberfläche, insbesondere unmittelbar nach der Benetzung über das zumindest eine Ausbringelement, zu erfassen, während die zweite Sensoreinrichtung dazu eingerichtet ist, während des Ausbringvorgangs die zumindest eine unbenetzte Oberfläche, insbesondere unmittelbar vor der Benetzung über das zumindest eine Ausbringelement, zu erfassen. Die erste und/oder zweite Sensoreinrichtung ist ferner dazu eingerichtet, ein erstes und/oder zweites Sensorsignal in Abhängigkeit der zumindest einen erfassten Oberfläche zu generieren und/oder an das zugeordnete Steuer- und/oder Regelsystem zu übertragen.

Alternativ oder zusätzlich kann die erste und/oder zweite Sensoreinrichtung derart, insbesondere seitlich an der Spritze, angeordnet sein, dass vorzugsweise über die erste und/oder zweite Sensoreinrichtung jeweils zumindest der Pflanzenbestand seitlich neben der Spritze erfassbar ist. Besonders bevorzugt ist mittels der zumindest einen ersten Sensoreinrichtung ein Pflanzenbestand, insbesondere eine Oberfläche, aus einer vorangegangenen und/oder bereits benetzten Fahrgasse erfassbar, während mittels der zumindest einen zweiten Sensoreinrichtung ein Pflanzenbestand, insbesondere Oberfläche, einer bevorstehenden und/oder unbenetzten Fahrgasse erfassbar ist.

In einer anderen besonders bevorzugten Ausführungsform der erfindungsgemäßen Spritze sind die zumindest eine erste und/oder zweite Sensoreinrichtung an zumindest einer unbemannten Flugvorrichtung, insbesondere Drohne, angeordnet. Die erste Sensoreinrichtung ist bevorzugt an einer ersten Flugvorrichtung und die zweite Sensoreinrichtung an einer zweiten Flugvorrichtung angeordnet. Vorzugsweise befindet sich die erste Flugvorrichtung während eines Ausbringvorgangs in Fahrtrichtung hinter der Spritze, insbesondere dem zumindest einen Ausbringelement, und die zweite Flugvorrichtung vor der Spritze, insbesondere dem zumindest einen Ausringelement. Somit ist erreicht, dass die erste und zweite Sensoreinrichtung während des Ausbringvorgangs einen ausreichenden Abstand zur Spritze und somit zum ausgebrachten Spritzmittel aufweisen und dabei besonders betriebssicher betreibbar sind. Alternativ oder zusätzlich können die erste und zweite Sensoreinrichtung an derselben Flugvorrichtung angeordnet sein. Der benetzte und unbenetzte Zustand der zumindest einen Oberfläche ist dabei in abwechselnder Reihenfolge erfassbar. Somit ist für die erfindungsgemäße Spritze und/oder das erfindungsgemäße Verfahren zumindest nur eine Flugvorrichtung erforderlich und die Spritze und/oder das Verfahren besonders einfach ausführbar. In einer ferner bevorzugten Ausführungsform ist die erste oder zweite an der zumindest einen Flugvorrichtung angeordnete Sensoreinrichtung dazu eingerichtet, die zumindest eine Oberfläche, vorzugsweise mehrere Oberflächen, sowohl im unbenetzten als auch im benetzten Zustand zu erfassen. Neben der Anzahl der Flugvorrichtungen ist somit auch die Anzahl benötigter Sensoreinrichtung besonders gering.

In einer anderen Weiterbildung der erfindungsgemäßen Spritze ist die landwirtschaftliche Spritze, insbesondere das Steuer- und/oder Regelsystem, dazu eingerichtet ist, das erfindungsgemäße Verfahren zum Ausbringen von Spritzmittel auszuführen.

Weitere Einzelheiten der Erfindung sind der Beispielsbeschreibung und den Zeichnungen zu entnehmen. Die Zeichnungen zeigen
- Fig.1: eine perspektivische Heckansicht einer landwirtschaftlichen Spritze;
- Fig.2: einen schematischen Detailausschnitt in Seitenansicht der landwirtschaftlichen Spritze; und
- Fig.3: einen schematischen Ablaufplan des erfindungsgemäßen Verfahrens.

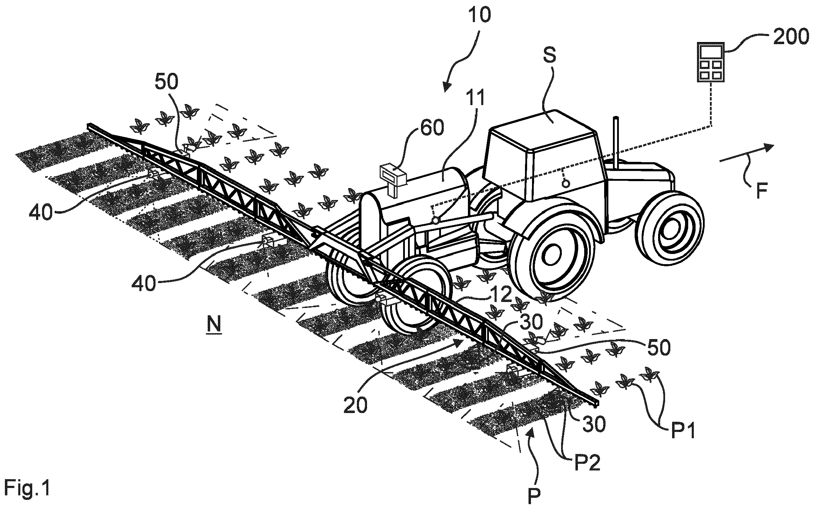

Eine von einem Schlepper S gezogene landwirtschaftliche Spritze 10 ist in der Fig.1 gezeigt. Es ist zu erkennen, dass die Spritze 10 ein quer zu einer Fahrtrichtung F ausklappbares und daran angeordnetes Gestänge 12 umfasst.

Weiterhin umfasst die Spritze 10 ein in den Figuren nicht gezeigtes spritzmittelleitendes- und/oder-förderndes Fördersystem zum Zubringen eines Spritzmittels 30, insbesondere Pflanzenschutz- und/oder Düngemittels, aus einem Vorratsbehälter 11 der Spritze 10 zu mehreren nebeneinander an dem Gestänge 12 angeordneten Ausbringelementen 20, insbesondere Spritzdüsen 21, 22. Die Ausbringelemente 20, insbesondere Spritzdüsen 21, 22, sind dazu eingerichtet, das Spritzmittel 30 auf der Basis zumindest eines Einstellparameters auf einem Pflanzenbestand P einer landwirtschaftlichen Nutzfläche N auszubringen. Dabei ist zumindest eine Oberfläche P1, P2 des Pflanzenbestands P zumindest teilweise mit dem Spritzmittel 30 benetzbar. Es ist weiterhin zu sehen, dass die Spritze 10 mehrere erste Sensoreinrichtungen 40 umfasst, die dazu eingerichtet sind, die zumindest eine Oberfläche P2 in einem benetzten Zustand zu erfassen. Ein der Spritze 10 zugeordnetes Steuer- und/oder Regelsystem 200, das in der Fig.1 ebenfalls zu sehen ist, ist hierbei dazu eingerichtet, den zumindest einen Einstellparameter in Abhängigkeit der mittels der ersten Sensoreinrichtung 40 erfassbaren Oberfläche P2 anzupassen.

Der Einstellparameter stellt hierbei eine Einstellung und/oder Parametrierung der Spritze 10, insbesondere zumindest einer Einrichtung des Fördersystems und/oder des Ausbringelements 20, dar, der einen Durchfluss, insbesondere eine Durchflussmenge, eine Ausbringmenge und/oder einen Druck des Spritzmittels 30 innerhalb des zumindest einen Fördersystems, Ausbringelements 20 und/oder im Bereich des Ausbringelements zumindest teilweise beeinflusst.

Alternativ zum gezeigten Ausführungsbeispiel kann die landwirtschaftliche Spritze 10 auch selbstfahrend oder von dem Schlepper S tragbar ausgebildet sein.

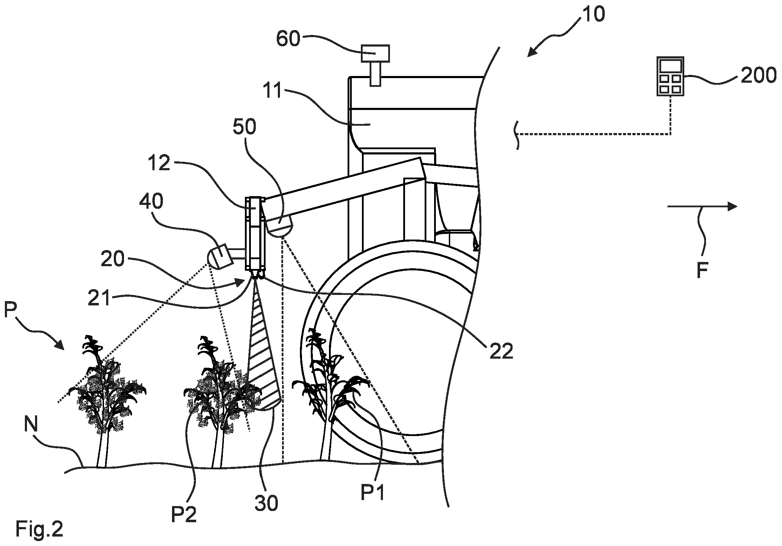

Ein mittels der Spritze 10 ausführbarer Ausbringvorgang des Spritzmittels 30 ist in der Fig.2 in einem Detailausschnitt zu sehen. Neben der in Fahrtrichtung F hinter dem Ausbringelement 20 an der Spritze 10, insbesondere dem Gestänge 12, angeordneten ersten Sensoreinrichtung 40, umfasst die Spritze 10 zumindest eine zweite Sensoreinrichtung 50. Die zweite Sensoreinrichtung 50 ist in Fahrtrichtung F vor dem Ausbringelement 20 ebenfalls an der Spritze 10, insbesondere dem Gestänge 12, angeordnet. Alternativ zum gezeigten Ausführungsbeispiel kann die erste und/oder zweite Sensoreinrichtung 40, 50 an einer andere Position der Spritze 10 und/oder am Schlepper S angeordnet sein. Ferner ist zumindest eine weitere Ausführungsform denkbar, bei der die zumindest eine erste und/oder zweite Sensoreinrichtung 40, 50 an jeweils einer und/oder gemeinsam an einer unbemannten Flugvorrichtung, insbesondere Drohne, angeordnet sind. Die zumindest eine zweite Sensoreinrichtung 50 ist hierbei dazu eingerichtet, den Pflanzenbestand P und/oder die zumindest eine Oberfläche P1, insbesondere optisch bzw. berührungslos, im unbenetzten Zustand zu erfassen. Alternativ zum gezeigten Ausführungsbeispiel können der Pflanzenbestand P und/oder die zumindest eine Oberfläche P1 im unbenetzten Zustand, insbesondere manuell von einem Bediener und/oder automatisiert vom Steuer- und/oder Regelsystem 200, vorgegeben werden.

Beim Erfassen und/oder Vorgeben der zumindest einen Oberfläche P1 im unbenetzten Zustand wird alternativ oder zusätzlich zumindest eine Oberflächenund/oder Pflanzeninformation, beispielsweise in Form einer Feuchtigkeit, einer Oberflächenstruktur und/oder eines Farbtons, insbesondere zumindest eines Farbanteils, entlang der zumindest einen Oberfläche P1, insbesondere des Blatts und/oder Pflanzenstängels, erfasst und/oder vorgegeben. Die Oberflächenund/oder Pflanzeninformation können hierbei auch weitere Eigenschaften bzw. Benetzungseigenschaften des Pflanzenbestands und/oder der zumindest einen Oberfläche P1, insbesondere dessen Benetzbarkeit, Polarität, Emissionsgrad und/oder Rauigkeit umfassen.

Unter Berücksichtigung des benetzten und unbenetzten Zustands der zumindest einen Oberfläche P1, P2 wird anschließend eine tatsächliche Benetzung der zumindest einen Oberfläche P2 ermittelt. Hierbei wird die zumindest eine unbenetzte Oberfläche P1 mit der zumindest einen benetzten Oberfläche P2 verglichen und insbesondere eine Abweichung des unbenetzten Zustands zum benetzten Zustand ermittelt.

Des Weiteren wird die ermittelte, insbesondere berechnete, tatsächliche Benetzung mit einer abrufbaren und/oder vorgebbaren Sollbenetzung der zumindest einen Oberfläche P1, P2 verglichen. Hierbei wird zumindest eine Nutzpflanze aus dem Pflanzenbestand P, insbesondere die Art, Größe und/oder das Entwicklungsstadium, erfasst und/oder vorgegeben, wobei die Sollbenetzung in Abhängigkeit, insbesondere nach dem Bedarf, der zumindest einen erfassten und/oder vorgegebenen Nutzpflanze, insbesondere dessen Art, Größe und/oder Entwicklungsstadium, ermittelt wird. Die zumindest eine Nutzpflanze wird hierbei mittels der zumindest einen zweiten Sensoreinrichtung 50 erfasst und/oder, insbesondere vom Steuer- und/oder Regelsystem 200, vorgegeben. Alternativ hierzu kann die Nutzpflanze und/oder die Sollbenetzung auch manuell von einem Bediener abgerufen und/oder vorgegeben werden. Alternativ und/oder zusätzlich ist auch eine automatisierte Erfassung der zumindest einen Nutzpflanze über zumindest eine weitere, insbesondere dritte, Sensoreinrichtung denkbar.

Ferner ist eine alternative Ausführungsform denkbar bei der zusätzlich zumindest eine Umgebungsbedingung, insbesondere Umgebungstemperatur, Umgebungsfeuchtigkeit, Umgebungsdruck und/oder Luftbewegungen erfasst und/oder vorgegeben und zur Ermittlung der tatsächlichen Benetzung und/oder der Sollbenetzung berücksichtigt werden.

Darüber hinaus wird der zumindest eine Einstellparameter somit in Abhängigkeit der ermittelten tatsächlichen Benetzung und/oder der Abweichung der tatsächlichen Benetzung zu der Sollbenetzung angepasst. Dementsprechend wird die Ausbringung des Spritzmittels 30 über das zumindest eine Ausbringelement 20, insbesondere die Spritzdüsen 21, 22, infolge der Anpassung des zumindest einen Einstellparameters beeinflusst.

Insbesondere wird vor oder während des Ausbringvorgangs zumindest ein, insbesondere vom Pflanzenbestand P abhängiger, Basis-Einstellparameter und zumindest ein Grenz-Einstellparameter abgerufen und/oder vorgegeben. Der Einstellparameter kann dabei zwischen dem Basis-Einstellparameter und dem zumindest einen Grenz-Einstellparameter angepasst werden. Überschreitet ein auf Grundlage der tatsächlichen Benetzung und/oder der Sollbenetzung ermittelter Einstellparameter den zumindest einen Grenz-Einstellparameter, wird dieser auf den zumindest einen Grenz-Einstellparameter angepasst, insbesondere korrigiert.

Ferner wird alternativ oder zusätzlich zur Sollbenetzung zumindest ein unterer und/oder oberer Grenzwert der Sollbenetzung abgerufen und/oder vorgegeben. Eine Benetzung unterhalb des unteren Grenzwertes stellt dabei eine unzureichende Benetzung der zumindest einen Oberfläche P1, P2 dar, während eine Benetzung oberhalb des oberen Grenzwertes eine zu starke Benetzung der zumindest einen Oberfläche P1, P2 darstellt. Darüber hinaus wird der Bediener alternativ oder zusätzlich beim Überschreiten zumindest eines unteren und/oder oberen Grenzwertes der Sollbenetzung informiert und/oder alarmiert.

Das Spritzmittel 30 wird, wie in der Fig.2 gezeigt, bedarfsgerecht über das zumindest eine Ausbringelement 20 auf dem Pflanzenbestand P, insbesondere der zumindest einen Oberfläche P1, P2, aufgebracht. Das Ausbringelement 20 ist hierbei als Mehrfachdüsenkörper mit einer ersten Spritzdüse 21 und einer zweiten Spritzdüse 22 ausgebildet. Ferner ist dem Ausbringelement 20, insbesondere sind den Spritzdüsen 21, 22, zumindest eine in den Figuren nicht gezeigte Ventileinrichtung zugeordnet. Hierbei werden das zumindest eine Ausbringelement 20, insbesondere die Spritzdüsen 21, 22, und/oderdie zumindest eine Ventileinrichtung in bekannter Weise nach Art einer Pulsweitenund/oder Pulsfrequenz-Modulation angesteuert und somit die Ausbringung des Spritzmittels 30 über das zumindest eine Ausbringelement 20 beeinflusst. Alternativ oder zusätzlich beeinflusst der zumindest eine Einstellparameter dabei die Pulsweite und/oder Pulsfrequenz und somit auch je nach Bedarf das ausbringbare Tropfenspektrum, insbesondere die Tröpfchengröße und/oderverteilung, des Spritzmittels 30. Somit kann beispielsweise zur Anpassung des Tropfenspektrums der Druck des Spritzmittels verändert werden, wobei durch eine geeignete Anpassung der Pulsweite und/oder der Pulsfrequenz die Ausbringmenge des Spritzmittels 30, insbesondere bei verändertem Tropfenspektrum, zumindest nahezu konstant bleibt.

Ferner ist dem zumindest einen Ausbringelement 20, insbesondere den Spritzdüsen 21, 22, ein Benetzungsparameter zugeordnet, wobei das zumindest eine Ausbringelement 20 in Abhängigkeit des Benetzungsparameters und/oder der tatsächlichen Benetzung aktiviert, angesteuert und/oder geregelt wird. Unter dem Benetzungsparameter ist dabei ein experimentell und/oder theoretisch bestimmter Zusammenhang zwischen dem Ausbringelement 20, insbesondere den Spritzdüsen 21, 22, und dem zumindest einen Einstellparameter, den Umgebungsbedingungen und/oder dem Pflanzenbestand P, insbesondere der zumindest einen Oberfläche P1, P2, zu verstehen. Somit beeinflusst dieser die neben den Benetzungseigenschaften des Pflanzenbestands P, insbesondere der zumindest einen Oberfläche P1, P2, alternativ oder zusätzlich die Benetzung.

Dem gegenüber wird in Abhängigkeit des zumindest einen aktivierten Ausbringelements 20, insbesondere der Spritzdüsen 21, 22, die zumindest eine Oberfläche P2 im benetzten Zustand erfasst. Hierzu ist die Erfassung mittels der zumindest einen ersten Sensoreinrichtung 40 über einen einstellbaren Erfassungsparameter beeinflussbar. Der Erfassungsparameter stellt dabei eine Einstellung und/oder Parametrierung der zumindest einen ersten Sensoreinrichtung 40 und/oder des Steuer- und/oder Regelsystems 200 dar, mittels dem beispielsweise eine Fokussierung, die Abmessungen und/oder die Position eines Erfassungsbereiches auf dem Pflanzenbestand P usw., einstellbar ist. Ist ein Ausbringelement 20, insbesondere eine Spritzdüse 21, 22, eher dazu geeignet tiefere Regionen der zumindest einen Oberfläche P1, P2, insbesondere der Nutzpflanze, zu benetzen, wird der Erfassungsparameter und damit die erste Sensoreinrichtung 40 und/oder das Steuer- und/oder Regelsystem 200 derartig eingestellt und/oder parametriert, dass tiefere Regionen bei der Erfassung und/oder Auswertung stärker berücksichtigt werden.

Des Weiteren umfasst die Spritze 10 zumindest eine in den Figuren nicht dargestellte Aufbereitungseinheit die dazu eingerichtet ist, dass Spritzmittel 30, insbesondere innerhalb des Vorratsbehälters 11 zumindest teilweise aufzubereiten, insbesondere zu temperieren. Die zumindest eine Aufbereitungseinheit ist in dem gezeigten Ausführungsbeispiel derartig innerhalb der Spritze 10 angeordnet, dass die Aufbereitung, insbesondere Temperierung, zentral im Vorratsbehälter 11 für das aus dem zumindest einen Ausbringelement 20 ausgebrachten Spritzmittel 30 erfolgt. In einer alternativen nicht gezeigten Ausführungsform kann die Aufbereitungseinheit auch derartig angeordnet sein, dass die Aufbereitung, insbesondere Temperierung, entlang des Fördersystems, insbesondere Abschnittsweise für mehrere Ausbringelemente 20 und/oder individuell für ein Ausbringelement 20, ausgeführt werden kann.

Bei der Aufbereitung wird zumindest ein zusätzlicher Stoff, insbesondere ein Tracer, Farbstoff, Uranin, dem Spritzmittel 30, insbesondere vor der Ausbringung zugegeben. Der Stoff ist dabei derartig ausgeführt, dass dieser einen besonders großen Kontrast zur zumindest einen Oberfläche P1, P2 aufweist und somit von der zumindest einen ersten Sensoreinrichtung 40 besser erfassbar ist. Zur weiteren Optimierung der Erfassung umfasst die Spritze 10 zumindest eine, insbesondere an der Spritze 10 angeordnete und/oder auf die zumindest eine Oberfläche P1, P2 ausgerichtete, Beleuchtungseinheit 60. Die Beleuchtungseinheit 60 ist dabei dazu eingerichtet, die zumindest eine Oberfläche P1, P2 derart zu beleuchten, dass die zumindest eine Oberfläche P1, P2 auch während unterschiedlichen Tageszeiten, Wetterlagen und/oder innerhalb von beschatteten Bereichen zumindest nahezu gleiche Voraussetzungen zur Erfassung aufweist. Somit ist der Einfluss schwankender Umgebungshelligkeit auf die Erfassung der zumindest einen Oberfläche in besonders einfacher Weise reduziert. Darüber hinaus ist die zumindest eine Beleuchtungseinheit 60, insbesondere das erzeugte Licht, auf den zusätzlichen Stoff innerhalb des Spritzmittels 30 abgestimmt, so dass das Spritzmittel 30 und/oder der Stoff nach Art von Fluoreszenz angeregt wird und somit die Erfassung der zumindest einen Oberfläche P2 im benetzten Zustand über die zumindest eine erste Sensoreinrichtung 40 noch weiter verbessert wird. Die Beleuchtungseinheit 60 ist in diesem Beispiel dazu eingerichtet, alternativ oder zusätzlich ultraviolettes Licht zu erzeugen, wobei alternativ auch andere Arten von Licht zur Anregung fluoreszierender Stoffe denkbar sind.

Alternativ oder zusätzlich kann das Spritzmittel 30 vor der Ausbringung temperiert, insbesondere erhitz oder gekühlt werden. Bei einer derartigen Ausführungsform ist die zumindest eine erste und/oder zweite Sensoreinrichtung 40, 50 dazu eingerichtet, eine Temperatur, insbesondere an zumindest einem Punkt und/oder mehreren Punkten, entlang der zumindest einen Oberfläche P1, P2 zu erfassen. Beispielsweise kann die zumindest eine erste und/oder zweite Sensoreinrichtung 40, 50 hierbei als berührungsloser Temperatur-Sensor, insbesondere Infrarot-Sensor bzw. Kamera, ausgebildet sein. In Abhängigkeit der erfassten Temperatur entlang der zumindest einen Oberfläche P1, P2 und/oder der Umgebungsbedingungen, insbesondere der Temperatur in unmittelbarer Umgebung der zumindest einen Oberfläche P1, P2, wird das Spritzmittel 30 und/oder der zusätzlich zugegebene Stoff temperiert. Die Temperierung, insbesondere Erhitzung oder Kühlung, erfolgt dabei derart, dass die Temperaturdifferenz zwischen dem Spritzmittel 30 und der zumindest einen Oberfläche P1, P2 und/oder der Temperatur der Umgebung möglichst groß ist.

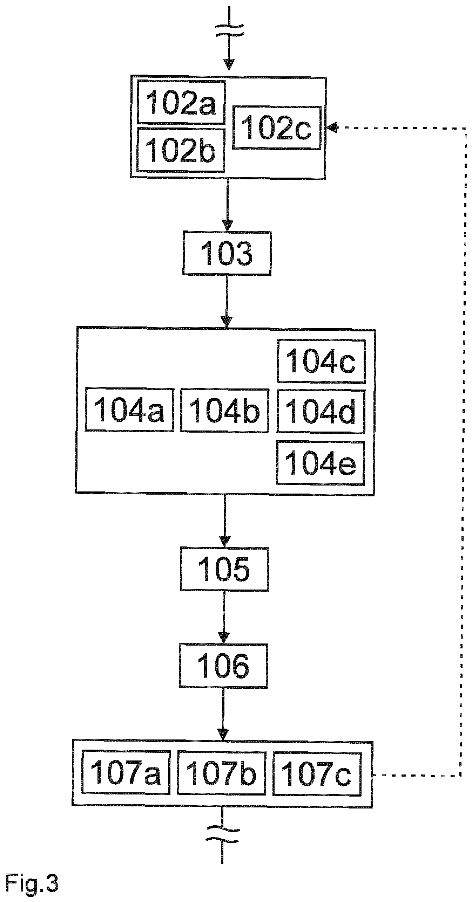

Die Fig.3 zeigt ein erfindungsgemäßes Ablaufdiagramm eines Verfahrens zum Ausbringen von Spritzmittel 30. Das Verfahren wird durch die nachfolgenden Schritte eingeleitet:
102a) Erfassen und/oder Vorgeben zumindest einer Nutzpflanze aus dem Pflanzenbestand, vorzugsweise eine Art, Größe und/oder ein Entwicklungsstadium der zumindest einen Nutzpflanze;
102b) Ermitteln und/oder Vorgeben der Sollbenetzung in Abhängigkeit der erfassten und/oder vorgegebenen Nutzpflanze, insbesondere dessen Art, Größe und/oder Entwicklungsstadium; und
102c) Abrufen und/oder Vorgeben zumindest eines Einstellparameters mittels zumindest einem der landwirtschaftlichen Spritze 10 zugeordneten Steuerund/oder Regelsystem.

Sobald die Sollbenetzung und der zumindest eine Einstellparameter abgerufen, vorgegeben und/oder ermittelt sind wird der nachfolgende Schritt ausgeführt:
103) Einstellen und/oder Parametrieren der landwirtschaftlichen Spritze 10, insbesondere zumindest einer Einrichtung innerhalb eines spritzmittelleitenden Fördersystems und/oder zumindest eines Ausbringelements, auf Basis des zumindest einen Einstellparameters.

Anschließend werden die nachfolgenden Schritte ausgeführt:
104a) Ausbringen des Spritzmittels über das zumindest eine an einem Gestänge 12 der Spritze 10 angeordnete Ausbringelement auf einen Pflanzenbestand einer landwirtschaftlichen Nutzfläche; wobei zumindest eine Oberfläche des Pflanzenbestands zumindest teilweise mit Spritzmittel benetzt wird; und
104b) Erfassen der zumindest einen Oberfläche in einem benetzten Zustand mittels zumindest einer ersten Sensoreinrichtung.

Parallel zu den beiden vorgenannten Schritten wird der nachfolgende Schritt ausgeführt:
104c) Erfassen und/oder Vorgeben der zumindest einen Oberfläche in einem unbenetzten Zustand.

Dieser Schritt kann erfindungsgemäß durch die folgenden optionalen Schritte ergänzt werden:
104d) Erfassen und/oder Vorgeben wenigstens einer Temperatur der zumindest einen Oberfläche im unbenetzten Zustand und/oder der, insbesondere unmittelbaren, Umgebung; und
104e) Aufbereiten, insbesondere temperieren, des Spritzmittels in Abhängigkeit der erfassten und/oder vorgegebenen Temperatur.

Nachdem die zumindest eine Oberfläche P1, P2 im unbenetzten und benetzten Zustand ermittelt ist werden die nachfolgenden Schritte nacheinanderausgeführt:
105) Ermitteln einer tatsächlichen Benetzung der zumindest einen Oberfläche P1, P2 unter Berücksichtigung des benetzten und unbenetzten Zustands; und
106) Vergleichen der tatsächlichen Benetzung mit einer abrufbaren und/oder vorgebbaren Sollbenetzung der zumindest einen Oberfläche.

Anschließend wird der Einstellparameter durch die nachfolgenden Schritte angepasst:
107a) Anpassen des zumindest einen Einstellparameters in Abhängigkeit der mittels der ersten Sensoreinrichtung erfassten Oberfläche; und
107b) Anpassen des zumindest einen Einstellparameters in Abhängigkeit der tatsächlichen Benetzung; oder
107c) Anpassen des zumindest einen Einstellparameters in Abhängigkeit einer Abweichung der tatsächlichen Benetzung zu einer Sollbenetzung der zumindest einen Oberfläche.

Alle oben beschriebenen Schritte können sich während des Arbeitsvorgangs ständig wiederholen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Landwirtschaftliche Spritze
- 11: Vorratsbehälter
- 12: Gestänge
- 20: Ausbringelemente
- 21, 22: Spritzdüse
- 30: Spritzmittel
- 40: Erste Sensoreinrichtung
- 50: Zweite Sensoreinrichtung
- 60: Beleuchtungseinheit
- 200: Steuer- und/oder Regelsystem

- F: Fahrtrichtung
- N: Landwirtschaftliche Nutzfläche
- P: Pflanzenbestand, Nutzpflanze
- P1: Oberfläche im unbenetzten Zustand
- P2: Oberfläche im benetzten Zustand
- S: Schlepper

## Patentansprüche

1. Verfahren zum Ausbringen von Spritzmittel (30) mittels einer landwirtschaftlichen Spritze (10) mit zumindest den folgenden Schritten:
- Abrufen und/oder Vorgeben zumindest eines Einstellparameters mittels zumindest einem der landwirtschaftlichen Spritze (10) zugeordneten Steuer- und/oder Regelsystem (200);
- Einstellen und/oder Parametrieren der landwirtschaftlichen Spritze (10), insbesondere zumindest einer Einrichtung innerhalb eines spritzmittelleitenden Fördersystems und/oder zumindest eines Ausbringelements (20), auf Basis des zumindest einen Einstellparameters;
- Ausbringen des Spritzmittels (30) über zumindest ein an einem Gestänge (12) der Spritze (10) angeordnetes Ausbringelement (20) auf einen Pflanzenbestand (P) einer landwirtschaftlichen Nutzfläche (N); wobei zumindest eine Oberfläche (P1, P2) des Pflanzenbestands (P) zumindest teilweise mit Spritzmittel (30) benetzt wird;
- Erfassen der zumindest einen Oberfläche (P2) in einem benetzten Zustand mittels zumindest einer ersten Sensoreinrichtung (40);
- Anpassen des zumindest einen Einstellparameters in Abhängigkeit der mittels der ersten Sensoreinrichtung (40) erfassten Oberfläche (P2);
**gekennzeichnet durch** zumindest die folgenden Schritte:
- Erfassen und/oder Vorgeben der zumindest einen Oberfläche (P1, P2) in einem unbenetzten Zustand; und
- Ermitteln einer tatsächlichen Benetzung der zumindest einen Oberfläche (P1, P2) unter Berücksichtigung des benetzten und unbenetzten Zustands.

2. Verfahren nach Anspruch 1, **gekennzeichnet durch den Schritt:**
- Anpassen des zumindest einen Einstellparameters in Abhängigkeit der tatsächlichen Benetzung.

3. Verfahren nach zumindest einem der vorgenannten Ansprüche 1 und 2,
**dadurch gekennzeichnet, dass** die zumindest eine Oberfläche (P1) im unbenetzten Zustand mittels zumindest einer zweiten, vorzugsweise optischen, Sensoreinrichtung (50) erfasst wird.

4. Verfahren nach zumindest einem der vorgenannten Ansprüche 1 bis 3,
**dadurch gekennzeichnet, dass** zur Ermittlung der tatsächlichen Benetzung der benetzte und unbenetzte Zustand der zumindest einen Oberfläche (P1, P2) miteinander verglichen wird, vorzugsweise eine Abweichung des benetzten Zustands zum unbenetzten Zustand ermittelt wird.

5. Verfahren nach zumindest einem der vorgenannten Ansprüche 1 bis 4,
**gekennzeichnet durch** zumindest einen der folgenden Schritte:
- Vergleichen der tatsächlichen Benetzung mit einer abrufbaren und/oder vorgebbaren Sollbenetzung der zumindest einen Oberfläche (P1, P2); und/oder
- Anpassen des zumindest einen Einstellparameters in Abhängigkeit einer Abweichung der tatsächlichen Benetzung zu einer Sollbenetzung der zumindest einen Oberfläche (P1, P2).

6. Verfahren nach Anspruch 5, **gekennzeichnet durch** die Schritte:
- Erfassen und/oder Vorgeben zumindest einer Nutzpflanze (P) aus dem Pflanzenbestand, vorzugsweise eine Art, Größe und/oder ein Entwicklungsstadium der zumindest einen Nutzpflanze (P), und
- Ermitteln und/oder Vorgeben der Sollbenetzung in Abhängigkeit der erfassten und/oder vorgegebenen Nutzpflanze (P), insbesondere dessen Art, Größe und/oder Entwicklungsstadium.

7. Verfahren nach zumindest einem der vorgenannten Ansprüche 5 und 6,
**gekennzeichnet durch** die Schritte:
- Ermitteln und/oder Vorgeben zumindest eines unteren und/oder oberen Grenzwertes , der Sollbenetzung, wobei die tatsächliche Benetzung mit dem zumindest einen unteren und/oder oberen Grenzwert der Sollbenetzung verglichen wird; und
- Informieren und/oder Alarmieren eines Bedieners, wenn der zumindest eine untere und/oder obere Grenzwert der Sollbenetzung von der tatsächlichen Benetzung überschritten wird.

8. Verfahren nach zumindest einem der vorgenannten Ansprüche 1 bis 7,
**dadurch gekennzeichnet, dass** das Spritzmittel (30) vor dem Ausbringen zumindest teilweise aufbereitet, vorzugsweise temperiert, wird.

9. Verfahren nach Anspruch 8, **gekennzeichnet durch** die Schritte:
- Erfassen und/oder Vorgeben wenigstens einer Temperatur der zumindest einen Oberfläche (P1) im unbenetzten Zustand und/oder der, insbesondere unmittelbaren, Umgebung; und
- Aufbereiten, insbesondere temperieren, des Spritzmittels (30) in Abhängigkeit der erfassten und/oder vorgegebenen Temperatur.

10. Verfahren nach zumindest einem der vorgenannten Ansprüche 1 bis 9,
**dadurch gekennzeichnet, dass** die zumindest eine Oberfläche (P1, P2) während der Erfassung wenigstens teilweise mittels zumindest einer Beleuchtungseinheit (60) beleuchtet wird.

11. Verfahren nach zumindest einem der vorgenannten Ansprüche 1 bis 10,
**dadurch gekennzeichnet, dass** das zumindest eine Ausbringelement (20) in Abhängigkeit eines dem Ausbringelement (20) zugeordneten Benetzungsparameters und/oder der tatsächlichen Benetzung aktiviert wird.

12. Verfahren nach zumindest einem der vorgenannten Ansprüche 1 bis 11,
**dadurch gekennzeichnet, dass** die Oberfläche (P2) im benetzten Zustand in Abhängigkeit des zumindest einen aktivierten Ausbringelements (20) erfasst wird.

13. Verfahren nach zumindest einem der vorgenannten Ansprüche 1 bis 12,
**dadurch gekennzeichnet, dass** zumindest ein, insbesondere vom Pflanzenbestand (P) abhängiger, Basis-Einstellparameter und Grenz-Einstellparameter abgerufen und/oder vorgegeben wird, wobei der zumindest eine Einstellparameter in Abhängigkeit der mittels der ersten Sensoreinrichtung (40) erfassten Oberfläche (P2) zwischen dem Basis-Einstellparameter und Grenz-Einstellparameter angepasst wird.

14. Landwirtschaftliche Spritze (10) zum Ausbringen von Spritzmittel (30), umfassend
- zumindest ein, insbesondere quer zu einer Fahrtrichtung (F) ausklappbares, an der landwirtschaftlichen Spritze (10) angeordnetes Gestänge (12),
- zumindest ein innerhalb der Spritze (10) angeordnetes spritzmittelleitendes und/oder-förderndes Fördersystem und mehrere nebeneinander an dem Gestänge (12) angeordnete Ausbringelemente (20), insbesondere Spritzdüsen (21, 22), die dazu eingerichtet sind, das Spritzmittel (30) auf der Basis zumindest eines Einstellparameters auf einem Pflanzenbestand (P) einer landwirtschaftlichen Nutzfläche (N) auszubringen, wobei zumindest eine Oberfläche (P1, P2) des Pflanzenbestands (P) zumindest teilweise mit dem Spritzmittel (30) benetzbar ist, und
- zumindest eine erste Sensoreinrichtung (40), wobei die zumindest eine erste Sensoreinrichtung (40) dazu eingerichtet ist, die zumindest eine Oberfläche (P2) in einem benetzten Zustand zu erfassen, und
- zumindest ein der landwirtschaftlichen Spritze (10) zugeordnetes Steuerund/oder Regelsystem (200), welches dazu eingerichtet ist den zumindest einen Einstellparameter in Abhängigkeit der mittels der ersten Sensoreinrichtung (40) erfassten Oberfläche (P2) anzupassen, **dadurch gekennzeichnet, dass** eine tatsächliche Benetzung der zumindest einen Oberfläche (P1, P2) unter Berücksichtigung des benetzten Zustands und einem erfassbaren und/oder vorgebbaren unbenetzten Zustand der zumindest einen Oberfläche (P1, P2) ermittelbar ist.

15. Landwirtschaftliche Spritze (10) nach Anspruch 14, **dadurch gekennzeichnet, dass** der zumindest eine Einstellparameter in Abhängigkeit der tatsächlichen Benetzung anpassbar ist.

16. Landwirtschaftliche Spritze (10) nach zumindest einem der vorgenannten Ansprüche 14 und 15, **dadurch gekennzeichnet, dass** der unbenetzte Zustand der zumindest einen Oberfläche (P1) mittels zumindest einer zweiten Sensoreinrichtung (50) erfassbar ist.

17. Landwirtschaftliche Spritze (10) nach zumindest einem der vorgenannten Ansprüche 14 bis 16, **dadurch gekennzeichnet, dass** die zumindest eine erste Sensoreinrichtung (40) und/oder zumindest eine zweite Sensoreinrichtung (50) als Radarsensor ausgebildet ist.

18. Landwirtschaftliche Spritze (10) nach zumindest einem der vorgenannten Ansprüche 16 und 17, **dadurch gekennzeichnet, dass** die zumindest eine zweite Sensoreinrichtung (50) in einer Fahrtrichtung (F) vor der zumindest einen ersten Sensoreinrichtung (40) an der landwirtschaftliche Spritze (10) angeordnet ist.

19. Landwirtschaftliche Spritze (10) nach zumindest einem der vorgenannten Ansprüche 16 und 17, **dadurch gekennzeichnet, dass** die zumindest eine erste und/oder zweite Sensoreinrichtung (40, 50) an zumindest einer unbemannten Flugvorrichtung, insbesondere Drohne, angeordnet sind.

20. Landwirtschaftliche Spritze (10) nach zumindest einem der vorgenannten Ansprüche 14 bis 19, **dadurch gekennzeichnet, dass** die landwirtschaftliche Spritze (10), insbesondere das Steuer- und/oder Regelsystem (200), dazu eingerichtet ist, das Verfahren zum Ausbringen von Spritzmittel (30) nach zumindest einem der Ansprüche 1 bis 12 auszuführen.
